# EUROPÄISCHE PATENTSCHRIFT

(11) **EP 1 810 862 B1**
(45) Veröffentlichungstag und Bekanntmachung des Hinweises auf die Patenterteilung: **17.09.2008**
(21) Anmeldenummer: 06001152.5
(22) Anmeldetag: 19.01.2006
(51) Int. Cl.: B60K 7/00, B60K 17/04, B60K 17/16

(54) **Antriebsachse**
Drive axle
Essieu moteur

(43) Veröffentlichungstag der Anmeldung: 25.07.2007
(73) Patentinhaber: Rögelberg Holding GmbH & Co. KG, 49716 Meppen (DE)
(72) Erfinder: Suelmann, Anton, 49716 Meppen (DE); Koop, Herbert, 49733 Haren (DE)
(74) Vertreter: Engelmann, Kristiana

(56) Entgegenhaltungen:
- EP-A- 0 441 331
- EP-A- 1 000 829
- WO-A-01/96136
- US-A- 3 994 375

## Beschreibung

Die Erfindung betrifft eine Antriebsachse mit einem in einem Antriebsachsengehäuse befindlichen Fahrmotor, einer von diesem angetriebenen Hohlwelle, einer Bremsvorrichtung und mit einem Differentialgetriebe, von dessen Ausgängen jeweils eine Abtriebswelle zu einem Achsende der Antriebsachse hin führt, wobei die Hohlwelle und das Differentialgetriebegehäuse gegenüber dem Antriebsachsengehäuse abgestützt sind.

Ein Gegenstand der eingangs genannten Art ist in der Gebrauchsmusterschrift DE 298 20 349 U1 beschrieben. Die dort offenbarte Antriebsachse ist mit einer Bremsvorrichtung versehen, die mit zwei Bremseinheiten direkt auf beide Abtriebswellen einwirkt und daher entsprechend großvolumig, aufwendig und teuer zu produzieren ist.

Es ist Aufgabe der vorliegenden Erfindung, eine Antriebsachse der eingangs genannten Art insbesondere bezüglich der Herstellungskosten zu verbessem und kompakt zu bauen.

Die Aufgabe wird gelöst durch eine Antriebsachse, deren Differentialgetriebe als selbstsperrendes Differentialgetriebe und deren Bremsvorrichtung zur direkten Einwirkung auf das Differentialgetriebegehäuse ausgebildet sind. Die erfindungsgemäße Antriebsachse baut deutlich kleiner als herkömmliche Antriebsachsen, da die Bremsvorrichtung zentral und kompakt im Bereich des Differentialgetriebes angeordnet werden kann. Der Verzicht auf zwei den Abtriebswellen zugehörigen Bremseinheiten verringert die Herstellungskosten deutlich, wobei aufgrund des selbstsperrenden Differentials auch bei schlechtem, beispielsweise rutschigem Untergrund keine Nachteile bezüglich der Bremsleistung in Kauf genommen werden müssen. Da es sich um ein passiv gesperrtes Differentialgetriebe handelt, bedarf es weiterhin keiner aufwendigen elektronischen Steuerung des Differentialgetriebes. Die Bremskräfte, die während eines Bremsvorgangs aufgebracht werden, beziehungsweise die die Bremskräfte ausübenden Teile der Bremsvorrichtung liegen zentral an dem Differentialgehäuse an, wodurch beide Abtriebswellen gleichmäßig gebremst werden.

Eine weitere vorteilhafte Ausgestaltung der Erfindung sieht eine Antriebsachse vor, deren Hohlwelle einenends über ein herkömmliches Festlager gelagert ist und anderenends unter Verzicht auf ein weiteres Festlager mittelbar über ein Untersetzungsgetriebe gegenüber dem Antriebsachsengehäuse abgestützt ist. Durch die Reduktion der zwei Festlager auf nur ein Festlager werden die Herstellungskosten weiter verringert und die Antriebsachse kann kompakter gebaut werden. Darüber hinaus hat es sich gezeigt, daß bei geringerer Wärmeentwicklung der Wirkungsgrad der Antriebsachse aufgrund der einfach gelagerten Motorwelle verbessert ist.

Während sich die direkte und die mittelbare Lagerung der Hohlwelle vorteilhafterweise in den unmittelbaren Endbereichen der Hohlwelle befinden, umfaßt die Erfindung auch solche Antriebsachsen, deren Hohlwelle auch von den Endbereichen beabstandet gelagert ist.

Bevorzugt ist das dem Motor direkt nachgeschaltete Untersetzungsgetriebe als Planetengetriebe mit zumindest einer Planetenstufe ausgebildet, wobei aufgrund der koaxialen Anordnung von Sonnenrad des Planetengetriebes und Hohlwelle eine kompakte und platzsparende Anordnung des Untersetzungsgetriebes im Antriebsachsengehäuse erreicht wird. Die Hohlwellenlagerung erhält dadurch gegenüber herkömmlichen Lagerungen über zwei direktwirkende Lager durch die selbstzentrierende Wirkung des Planetengetriebes die notwendige Stabilität.

Bei einer weiteren vorteilhaften Ausgestaltung der Erfindung sind die Stege bzw. Planetenträger des Planetengetriebes als Teil des Differentialgetriebegehäuses ausgebildet. Das Plantetengetriebe ist zwischen Fahrmotor und Differentialgetriebe angeordnet, so daß der Kraftfluß vom Fahrmotor über die Hohlwelle auf das Planetengetriebe stattfindet und von dort weiter auf das Differentialgetriebe. Von diesem verlaufen dessen Abtriebswellen zu den jeweiligen Endbereichen der Antriebsachse, um dort letztlich die Räder anzutreiben. Die Abtriebswellen des Differentialgetriebes, von denen eine koaxial zur Hohlwelle durch diese hindurch verläuft, sind demnach auch als Antriebswellen zu bezeichnen. Die Kombination von einer Planetenstufe und einem Differentialgetriebe in einer akzeptablen Drehzahlspanne führt zu einem hohen Wirkungsgrad des Antriebs bei gleichzeitig verminderter Geräuschentwicklung, wobei insbesondere die mögliche Verknüpfung von Planetenträger bzw. Steg und Differentialgetriebegehäuse bzw. -korb zu einer Einsparung an Teilen führt und damit die Herstellungskosten der erfindungsgemäßen Antriebsachse weiter reduziert werden.

Weitere Einzelheiten und Vorteile einer erfindungsgemäßen Antriebsachse ergeben sich aus der nachfolgenden Figurenbeschreibung mit den schematischen Darstellungen einer Antriebsachse. Es zeigt:
- Fig. 1: Einen Längsschnitt durch eine erfindungsgemäße Antriebsachse und
- Fig. 2: einen Schnitt entlang ||-|| gemäß Fig. 1.

Eine erfindungsgemäße Antriebsachse weist einen in einem Antriebsachsengehäuse 1 befindlichen Fahrmotor 2 auf, der als Innenläufer ausgebildet ist und einen Stator 3 sowie einen Rotor 4 aufweist. Ein Fahrmotorbereich 6 ist durch eine feste Gehäusewand 7 und eine als Lagerflansch ausgebildete lösbar festgelegte Gehäusewand 8 begrenzt, wobei die Anordnung auch umgekehrt sein kann. Durch den Fahrmotorbereich 6 verläuft eine Hohlwelle 9, die von dem Fahrmotor 2 angetrieben wird und mit dessen Rotor 4 verbunden ist.

Erfindungsgemäß ist vorgesehen, daß die Hohlwelle 9 einenends über ein Festlager 11 gegenüber der lösbar festgelegten Gehäusewand 8 und damit gegenüber dem Antriebsachsengehäuse 1 abgestützt ist. Anderenends ist die Hohlwelle 9 mittelbar über ein als Planetengetriebe 12 ausgebildetes Untersetzungsgetriebe gegenüber dem Antriebsachsengehäuse 1 abgestützt. Der Verzicht auf ein Lager geht neben geringeren Herstellungskosten einher mit einem Raumgewinn. Zusätzlich wird ein höherer Wirkungsgrad erreicht, da die Hohlwelle 9 nur einfach gelagert ist. Vorteilhafterweise wird das Festlager 11 hierbei aus dem Ölvorrat eines benachbarten Untersetzungsgetriebes geschmiert.

Im Bereich des Planetengetriebes 12 ist die Hohlwelle mit einer Verzahnung 13 versehen und somit als Sonnenrad des Planetengetriebes 12 ausgebildet. Alternativ hierzu kann die Hohlwelle 9 auch mit einem weiteren Zahnrad in Eingriff stehen, welches dann seinerseits das Sonnenrad des Planetengetriebes 12 darstellt. Ein Hohlrad 14 des Planetengetriebes 12 bildet eine Ablauffläche für Planetenräder 16 aus und ist beispielsweise über einen Schrumpfsitz fest mit dem Antriebsachsengehäuse 1 verbunden. Das Untersetzungsgetriebe 12 ist ein einstufiges Planetengetriebe; denkbar ist jedoch auch eine Ausbildung des Untersetzungsgetriebes 12 als mehrstufiges Planetengetriebe.

Die Stege 17 des Planetengetriebes 12, beziehungsweise die Planetenträger 17 der Planetenräder 16 sind gleichzeitig Teil eines Differentialgetriebegehäuses 18. Vorzugsweise sind jedoch alle Planetenträger 17 mit dem Differentialgetriebegehäuse 18 entweder einstückig ausgebildet oder fest verbunden und übertragen die Antriebskräfte auf das Differentialgetriebe 24. Von dem Differentialgehäuse 18 werden über einen Differentialbolzen 19 und Differentialritzel 21 die Antriebskräfte über die Differentialräder 42 auf die beiden Abtriebswellen 22 übertragen, Die Abtriebswellen 22 führen jeweils zu einem Achsende der Antriebsachse und weisen eine Verzahnung auf, mittels derer sie jeweils als Sonnenrad eines als Planetengetriebe 23 ausgebildeten, endachsenseitigen Untersetzungsgetriebes fungieren. Eine der Abtriebs- bzw. Antriebswellen 22 verläuft hierbei koaxial zur Hohlwelle 9 und durch diese hindurch.

Während das direkt mit dem Differentialgetriebe 24 verbundene Planetengetriebe 12 eine erste Untersetzungsstufe für beide Seiten darstellt, übersetzen die platzsparend in den jeweiligen Endbereichen der Antriebsachse angeordneten weiteren Planetengetriebe 23 die Momente der jeweiligen Abtriebsachsen und leiten die Antriebskräfte weiter auf die Radflansche 26.

Neben der mittelbaren Lagerung des Differentialgetriebes 24 über die Planetenträger des Planetengetriebes 12 ist das Differentialgetriebe 24 über einen Differentialdeckel 27 an einem Lagerflansch 28 sicher abgestützt.

Die erfindungsgemäße Antriebsachse ist mit einer Bremsvorrichtung 29 in Form einer Lamellenbremse ausgestattet, die direkt auf das Differentialgehäuse 18 wirkt und die damit gleichzeitig beide Räder bzw. Abtriebswellen 22 bremsen kann. Hierdurch entfallen die üblicherweise verwendeten zwei Bremseinheiten für die beiden Abtriebswellen 22.

Die Bremsvorrichtung 29 ist mit einer nicht näher dargestellten Bremskraftübersetzungsstufe 31 versehen, die die von einem Bremszug 32 ausgeübte Bremskraft auf einen Bremshebel 33 überträgt. Bei mechanischem oder hydraulischem Betätigen des Bremszuges 32 wird der Bremshebel 33 in Richtung Bremskraftübersetzungsstufe 31 bewegt und drückt auf eine Druckplatte 36 mit einer kugelkalottenförmigen Kontaktfläche 34. Die Druckplatte 36 wiederum überträgt die Bewegung auf die Bremslamellen 37 der Lamellenbremse. Die Bremslamellen 37 bestehen aus zwei Sätzen von Lamellen 37, von denen der eine verdrehfest aber geringfügig verschiebbar in Richtung der Drehachse 38 verdrehfest in dem Hohlrad 14 abgestützt ist, während der andere ebenfalls geringfügig axial verschiebbar aber verdrehfest auf dem Differentialgehäuse 18 angeordnet ist.

Durch den Druck der Druckplatte 36 werden die Lamellen, die sich einerseits an der Druckplatte 36, andererseits an einer Schulter des Hohlrades 14 abstützen, gegeneinander gedrückt. Die Drehbewegung des Differentialgetriebes 24 wird gebremst und die auftretende Verzögerung wird damit gleichmäßig auf die beiden Räder verteilt. Zusätzlich wird keine eigene Wandung als Gegenfläche für die Lamellen 37 benötigt. Durch die kugelkalottenförmige Kontaktfläche 34 wird der von dem einarmigen Bremshebel 33 ausgeübte Druck gleichmäßig auf die Druckplatte 36 verteilt. Der Bremshebel 33 ist hierbei nur einseitig schwenkbar gelagert und kann aufgrund des langen Hebelarms bei vergleichsweise geringen Betätigungskräften einen hohen Anpressdruck auf die Lamellen 37 erzeugen.

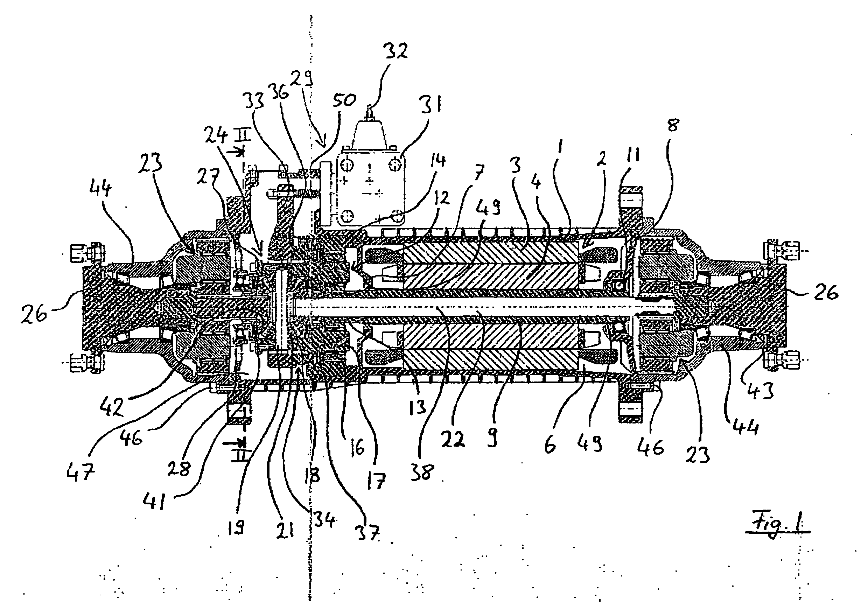

Das Differentialgetriebe 24 ist als Sperrdifferentialgetriebe ausgeführt, um auch bei schlechtem Untergrund eine Bremswirkung der Antriebsachse zu erzeugen. Ein solches Sperrdifferential ist wie in Fig. 1 abgebildet mit Differentiallamellen 41 versehen, die jeweils zwischen Differentialrad 42 und Differentialgehäuse 18 bzw. Differentialdeckel 27 angeordnet sind. Bei Übertragung eines Drehmomentes erfolgt aufgrund der Kegelverzahnung der Differentialritzel 21 und der Differentialräder 42 eine geringfügige Bewegung der Differentialräder 42 weg vom Differentialbolzen 19, wodurch Druck auf die Differentiallamellen 41 ausgeübt wird und das Differentialgetriebe 24 gesperrt wird. Die Verwendung von zwei Differentiallameliensätzen 41 jeweils auf einer Seite eines Differentialrades 42 führt zu einer Bremswirkung der Antriebsachse unabhängig davon, ob eines der Antriebsräder aufgrund eines schlechten Untergrundes schlechter haftet. Während das Differentialgetriebe 24 einerseits mit einem Festlager 53 gegenüber dem Antriebsachsengehäuse 1 abgestützt ist, wird es andererseits mittelbar durch das Planetengetriebe 12 gegenüber dem Antriebsachsengehäuse 1 abgestützt. Dies führt zu einer weiter kompakten Bauweise und entsprechenden Einsparungen bei den Materialkosten.

Verschmutzungskritische Bereiche der Antriebsachse sind die Bereiche zwischen den Radträgern 44 und den Radflanschen 26. Zur Verhinderung des Eindringens von Schmutz oder wickelnden Materialien ist es daher erfindungsgemäß weiterhin vorgesehen, einen Wickelschutz 43 zur Abdeckung des zwischen Radträger 44 und Radflansch 26 befindlichen Spaltes vorzusehen. In der hier dargestellten Ausführungsform weist der als Schutzring ausgebildete Wickelschutz 43 einen im wesentlichen L-förmigen Querschnitt auf und ist drehfest auf dem Radträger 44 angeordnet. Es liegt jedoch auch im Rahmen der Erfindung, andere Querschnittsformen und Befestigungen eines Wickelschutzes 43 an der Antriebsachse vorzusehen.

Die erfindungsgemäße Antriebsachse kann auf verschiedene Weisen geöffnet werden. Beide Radträger 44 sind als Endtöpfe zur Aufnahme der endachsenseitigen Untersetzungsgetriebe ausgebildet, wodurch die erfindungsgemäße Antriebsachse besonders kompakt baut. Gleichzeitig sind sie Teil des Antriebsachsengehäuses 1 und über Befestigungsmittel 46, üblicherweise Schrauben, an dem Hauptteil des Antriebsachsengehäuses 1 befestigt. Durch Lösen der Radträger 44 werden ebenfalls die Lagerflansche 8 und 28 gelöst, so daß zum einen der Fahrmotorbereich 6, zum anderen der Differentialgetriebebereich 47 für Wartungsmaßnahmen eingreifbar wird. Gleichzeitig kann die Hohlwelle 9 mitsamt dem Rotor 4 für Wartungszwecke herausziehbar ausgeführt werden. Während des Betriebs der Antriebsachse und im zusammengebauten Zustand wird die Verschmutzung des Fahrmotorbereiches 6 von sowohl dem Differentialgetriebegehäusebereich 47 als auch von dem Festlager 11 her wirksam durch zwischen Lagerflanschen 8 bzw. 28 und der Hohlwelle 9 angeordnete Dichtungsmittel 49 vermieden.

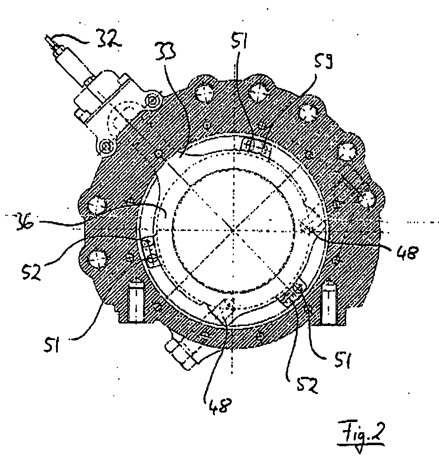

Der Aufbau der Lamellenbremse ist in Fig. 2 verdeutlicht. Bei Betätigen des Bremszuges 32 drückt der auf Stiften 48 schwenkbar gelagerte Bremshebel 33 auf die Druckplatte 36, die dann ihrerseits auf die in dieser Abbildung nicht dargestellten Bremslamellen 37 einwirkt. Bei Lüftung der Bremse wird der Bremshebel 33 durch ein Federelement 50 wieder in die Ausgangsposition gebracht, während die Druckplatte 36 mit Hilfe von in diesem Fall drei Schrauben-Druckfeder-Kombinationen von den Bremslamellen 37 entfernt wird. Die Druckfeder-Schrauben-Kombinationen sind gleichmäßig auf der Druckplatte verteilt und bestehen aus jeweils einer Abstandsschraube 51, die einen Maximalabstand der Druckplatte 36 von den Lamellen 37 vorgibt und einer daneben angeordneten Druckfeder 52, die bei Entlüftung der Bremse für die Beabstandung der Druckplatte 36 Sorge trägt. Diese Anordnung gewährleistet auch, daß die Druckplatte 36 nicht verkanten kann, sondern immer wieder selbsttätig in die Ursprungsposition zurückkehrt.

Vorteifhafterweise findet eine erfindungsgemäße Antriebsachse in einem Flurförderfahrzeug, beispielsweise einem elektrisch betriebenen Gabelstapler, Anwendung. Es ist jedoch auch denkbar, die Antriebsachse auch in anderen elektrisch betreibbaren Fahrzeugen einzusetzen.

## Patentansprüche

1. Antriebsachse mit einem in einem Antriebsachsengehäuse (1) befindlichen Fahrmotor (2), einer von diesem angetriebenen Hohlwelle (9), einer Bremsvorrichtung (29) und mit einem Differentialgetriebe (24), von dem jeweils eine Abtriebswelle (22) zu einem Achsende der Antriebsachse hin führt, wobei die Hohlwelle (9) und das Differentialgetriebegehäuse (18) gegenüber dem Antriebsachsengehäuse (1) abgestützt sind; **dadurch gekennzeichnet, daß** das Differentialgetriebe (24) als selbstsperrendes Differentialgetriebe (24) und die Bremsvorrichtung (29) zur direkten Einwirkung auf das Differentialgetriebegehäuse (18) ausgebildet sind.

2. Antriebsachse nach Anspruch 1, **dadurch gekennzeichnet, daß** die Bremsvorrichtung (29) als Lamellenbremse ausgebildet ist.

3. Antriebsachse nach einem der Ansprüche 1 oder 2, **dadurch gekennzeichnet, daß** die Bremsvorrichtung (29) zur Erzeugung eines gleichmäßigen Andrucks einen Bremshebel (33) mit einer kugelkalottenförmigen Kontaktfläche (34) aufweist.

4. Antriebsachse nach Anspruch 3, **dadurch gekennzeichnet, daß** der Bremshebel (33) einarmig ausgebildet ist.

5. Antriebsachse nach einem der Ansprüche 1 bis 4, **dadurch gekennzeichnet, daß** die Hohlwelle (9) einenends über ein Lager (11) gelagert ist und anderenends unter Verzicht auf ein weiteres Lager mittelbar über ein Untersetzungsgetriebe (12) gegenüber dem Antriebsachsengehäuse (1) abgestützt ist.

6. Antriebsachse nach Anspruch 5, **dadurch gekennzeichnet, daß** die Hohlwelle (9) über das Untersetzungsgetriebe (12) das Differentialgetriebe (24) antreibt.

7. Antriebsachse nach einem der Ansprüche 5 oder 6, **dadurch gekennzeichnet, daß** das Untersetzungsgetriebe (12) als Planetengetriebe (12) ausgebildet ist.

8. Antriebsachse nach Anspruch 7, **dadurch gekennzeichnet, daß** das Sonnenrad des Planetengetriebes (12) Teil der Hohlwelle (9) ist.

9. Antriebsachse nach einem der Ansprüche 7 oder 8, **dadurch gekennzeichnet, daß** die Planetenträger (17) des Planetengetriebes (12) Teil des Differentialgetriebegehäuses (18) sind.

10. Antriebsachse nach Anspruch 9, **dadurch gekennzeichnet, daß** das Differentialgetriebe (24) nur einseitig über ein Festlager (53) unmittelbar abgestützt ist.

11. Antriebsachse nach einem der Ansprüche 5 bis 10, **dadurch gekennzeichnet, daß** das Festlager (11) in einer Wand (8) des Antriebsachsengehäuses (1) angeordnet ist und aus dem Ölvorrat eines benachbarten Untersetzungsgetriebes (23) geschmiert wird.

12. Antriebsachse nach Anspruch 11, **dadurch gekennzeichnet, daß** die Wand (8) einen abgedichteten Fahrmotorbereich (6) begrenzt.

13. Antriebsachse nach einem der Ansprüche 1 bis 12, **dadurch gekennzeichnet, daß** an den Achsenden achsenendseitige Untersetzungsgetriebe (23) angeordnet sind.

14. Antriebsachse nach Anspruch 13, **dadurch gekennzeichnet, daß** die achsenendseitigen Untersetzungsgetriebe (23) als Planetengetriebe (23) ausgebildet sind.

15. Antriebsachse nach einem der Ansprüche 13 oder 14, **dadurch gekennzeichnet, daß** das Antriebsachsengehäuse (1) zwei lösbar befestigte Endtöpfe (44) aufweist, in denen die achsenendseitigen Untersetzungsgetriebe (23) angeordnet sind.

16. Antriebsachse nach einem der Ansprüche 1 bis 15, **gekennzeichnet durch** einen Wickelschutz (43) zur Abdeckung eines zwischen einem Radträger (44) und einem Radflansch (26) befindlichen Spaltes.

17. Antriebsachse nach Anspruch 16, **dadurch gekennzeichnet, daß** der Wickelschutz (43) einen im wesentlichen L-förmigen Querschnitt aufweist und drehfest auf dem Radträger (44) angeordnet ist.

18. Flurförderfahrzeug, **gekennzeichnet durch** eine Antriebsachse nach einem der Ansprüche 1 bis 17.

## Claims

1. Drive axle having a travel motor (2) situated in a drive-axle housing (1), having a hollow shaft (9) driven by the drive motor (2), having a braking arrangement (29) and having differential gearing (24) from which drive-shafts (22) run to respective ends of the drive axle, the hollow shaft (9) and the housing (18) of the differential gearing being supported from the drive-axle housing (1), **characterised in that** the differential gearing (24) is in the form of self-locking differential gearing (24) and the braking arrangement (29) is designed to act directly on the housing (18) of the differential gearing.

2. Drive axle according to claim 1, **characterised in that** the braking arrangement (29) is in the form of a disc brake.

3. Drive axle according to either of claims 1 and 2, **characterised in that,** to allow an even applied pressure to be generated, the braking arrangement (29) has a braking lever (33) having a hemispherical contacting surface (34).

4. Drive axle according to claim 3, **characterised in that** the braking lever (33) is of single-armed form.

5. Drive axle according to one of claims 1 to 4, **characterised in that** at one end the hollow shaft (9) is mounted by means of a bearing (11) and at the other end a further bearing is dispensed with and the hollow shaft (9) is supported indirectly on the housing (1) of the drive axle via a set of reduction gearing (12).

6. Drive axle according to claim 5, **characterised in that** the hollow shaft (9) drives the differential gearing (24) via the set of reduction gearing (12).

7. Drive axle according to either of claims 5 and 6, **characterised in that** the set of reduction gearing (12) is in the form of planetary gearing (12).

8. Drive axle according to claim 7, **characterised in that** the sun-wheel of the planetary gearing (12) is part of the hollow shaft (9).

9. Drive axle according to either of claims 7 and 8, **characterised in that** the planet-gear carriers (17) of the planetary gearbox (12) are part of the housing (18) of the differential gearing.

10. Drive axle according to claim 9, **characterised in that** the differential gearing (24) is directly supported by a fixed bearing (53) on only one side.

11. Drive axle according to one of claims 5 to 10, **characterised in that** the fixed bearing (11) is arranged in a wall (8) of the drive-axle housing (1) and is lubricated from the oil supply of an adjacent set of reduction gearing (23).

12. Drive axle according to claim 11, **characterised in that** the wall (8) is a boundary of a drive-motor region (6) which is sealed off.

13. Drive axle according to one of claims 1 to 12, **characterised in that** sets of axle-end reduction gearing (23) are arranged at the ends of the axle.

14. Drive axle according to claim 13, **characterised in that** the sets of axle-end reduction gearing (23) are in the form of planetary gearing (23).

15. Drive axle according to one of either of claims 13 and 14, **characterised in that** the drive-axle housing (1) has two terminal bell-housings (44) which are detachably fastened in place and in which the sets of axle-end reduction gearing (23) are arranged.

16. Drive axle according to one of claims 1 to 15, **characterised by** an anti-clogging seal (43) to cover a gap situated between a wheel mounting (44) and a wheel flange (26).

17. Drive axle according to claim 16, **characterised in that** the anti-clogging seal (43) is substantially L-shaped in cross-section and is arranged on the wheel mounting (44) to be solid in rotation therewith.

18. Floor-travelling transporting vehicle **characterised by** a drive axle according to one of claims 1 to 17.

## Revendications

1. Essieu moteur comportant un moteur de traction (2) situé dans un carter d'essieu moteur (1), un arbre creux (9) entraîné par celui-ci, un dispositif de freinage (29) et un différentiel (24), duquel respectivement un arbre de sortie (22) conduit à une extrémité de l'essieu moteur, l'arbre creux (9) et le carter de différentiel (18) étant supportés par rapport au carter d'essieu moteur (1) ; **caractérisé en ce que** le différentiel (24) est réalisé sous forme de différentiel (24) autobloquant et le dispositif de freinage (29) est réalisé pour agir directement sur le carter de différentiel (18).

2. Essieu moteur selon la revendication 1, **caractérisé en ce que** le dispositif de freinage (29) est réalisé sous forme de frein multidisque.

3. Essieu moteur selon l'une quelconque des revendications 1 ou 2, **caractérisé en ce que** le dispositif de freinage (29) présente un levier de frein (33) avec une surface de contact (34) en forme de calotte sphérique pour la génération d'une pression régulière.

4. Essieu moteur selon la revendication 3, **caractérisé en ce que** le levier de frein (33) est réalisé à bras unique.

5. Essieu moteur selon l'une quelconque des revendications 1 à 4, **caractérisé en ce que** l'arbre creux (9) est logé à une extrémité par le biais d'un palier (11) et est supporté à l'autre extrémité par rapport au carter d'essieu moteur (1) de manière indirecte par le biais d'un démultiplicateur (12) sans autre palier.

6. Essieu moteur selon la revendication 5, **caractérisé en ce que** l'arbre creux (9) entraîne le différentiel (24) par le biais du démultiplicateur (12).

7. Essieu moteur selon l'une quelconque des revendications 5 ou 6, **caractérisé en ce que** le démultiplicateur (12) est réalisé sous forme d'engrenage planétaire (12).

8. Essieu moteur selon la revendication 7, **caractérisé en ce que** la roue solaire de l'engrenage planétaire (12) fait partie de l'arbre creux (9).

9. Essieu moteur selon l'une quelconque des revendications 7 ou 8, **caractérisé en ce que** les porte-satellites (17) de l'engrenage planétaire (12) font partie du carter de différentiel (18).

10. Essieu moteur selon la revendication 9, **caractérisé en ce que** le différentiel (24) n'est supporté directement que d'un côté par le biais d'un palier fixe (53).

11. Essieu selon l'une quelconque des revendications 5 à 10, **caractérisé en ce que** le palier fixe (11) est agencé dans une paroi (8) du carter d'essieu moteur (1) et est lubrifié à partir de la réserve d'huile d'un démultiplicateur (23) adjacent.

12. Essieu selon la revendication 11, **caractérisé en ce que** la paroi (8) délimite une zone de moteur de traction (6) étanchée.

13. Essieu selon l'une quelconque des revendications 1 à 12, **caractérisé en ce que** des démultiplicateurs (23) côté extrémité d'essieu sont agencés au niveau des extrémités d'essieu.

14. Essieu moteur selon la revendication 13, **caractérisé en ce que** les démultiplicateurs (23) côté extrémité d'essieu sont réalisés sous forme d'engrenages planétaires (23).

15. Essieu moteur selon l'une quelconque des revendications 13 ou 14, **caractérisé en ce que** le carter d'essieu moteur (1) présente deux pots d'extrémité (44) fixés de manière amovible, dans lesquels sont agencés les démultiplicateurs (23) côté extrémité d'essieu.

16. Essieu moteur selon l'une quelconque des revendications 1 à 15, **caractérisé par** une protection contre l'enroulement (43) servant à recouvrir un interstice situé entre un porte-roue (44) et un flasque de roue (26).

17. Essieu moteur selon la revendication 16, **caractérisé en ce que** la protection contre l'enroulement (43) présente une section essentiellement en forme de L et est agencée de manière bloquée en rotation sur le porte-roue (44).

18. Chariot élévateur, **caractérisé par** un essieu moteur selon l'une quelconque des revendications 1 à 17.
